Europäisches Patentamt

European Patent Office

Office européen des brevets

(11) Veröffentlichungsnummer : **0 327 841 B1**

(12) **EUROPÄISCHE PATENTSCHRIFT**

(45) Veröffentlichungstag der Patentschrift :
**04.03.92 Patentblatt 92/10**

(21) Anmeldenummer : **89100753.6**

(22) Anmeldetag : **18.01.89**

(51) Int. Cl.$^5$ : **G21F 9/28**

(54) **Verfahren zum Zerlegen eines radioaktiv kontaminierten Bauteils.**

(30) Priorität : **28.04.88 DE 3814399**
**09.02.88 DE 3803792**

(43) Veröffentlichungstag der Anmeldung :
**16.08.89 Patentblatt 89/33**

(45) Bekanntmachung des Hinweises auf die
Patenterteilung :
**04.03.92 Patentblatt 92/10**

(84) Benannte Vertragsstaaten :
**DE FR**

(56) Entgegenhaltungen :
**DE-A- 2 726 206**
**DE-A- 2 908 141**

(73) Patentinhaber : **GNS GESELLSCHAFT FUR**
**NUKLEAR-SERVICE MBH**
**Goethestrasse 88**
**W-4300 Essen (DE)**

(72) Erfinder : **Rittscher, Dieter, Dipl.-Ing.**
**Schliepersberg 68**
**W-4300 Essen 15 (DE)**
Erfinder : **Stang, Wolfgang, Dipl.-Ing.**
**Auf der Kohlstatt 31**
**W-8871 Rettenbach (DE)**

(74) Vertreter : **Andrejewski, Walter, Dipl.-Phys. Dr.**
**et al**
**Patentanwälte Andrejewski, Honke & Masch**
**Postfach 10 02 54 Theaterplatz 3**
**W-4300 Essen 1 (DE)**

**Beschreibung**

Die Erfindung bezieht sich gattungsgemäß auf ein Verfahren zum Zerlegen eines radioaktiv kontaminierten Bauteils durch einen Sägevorgang. Die Säge wird dabei kontinuierlich in einer Richtung oder hin- und hergehend bewegt. Handelt es sich um ein metallisches Bauteil, so ist die Säge als Metallsäge ausgeführt. Handelt es sich um ein nichtmetallisches Bauteil, so ist die Säge nach Maßgabe des Werkstoffes eingerichtet. Bei derartigen Sägevorgängen entsteht stets auch kontaminiertes Sägefein, z. B. Metallstaub oder Sägemehl.

Bei den (aus der Praxis) bekannten Maßnahmen wird der Sägevorgang in einer besonderen, staubdichten Zelle durchgeführt. Das kontaminierte Sägefein fällt frei, vagabundierend, an, es wird jedoch in der Zelle aufgegangen, abgesaugt und trocken oder naß niedergeschlagen sowie entsorgt. Das ist aufwendig.

Der Erfindung liegt die Aufgabe zugrunde, das gattungsgemäße Verfahren so zu führen, daß freies, vagabundierendes Sägefein in störendem Maße nicht mehr anfällt.

Zur Lösung dieser Aufgabe lehrt die Erfindung, daß das kontaminierte Bauteil in einen Eisblock eingefroren wird und danach der Eisblock mit dem eingefrorenen Bauteil zersägt sowie das Sägefein im Sägespalt durch eine Flüssigkeit eingebunden wird. Bei der Flüssigkeit kann es sich um Schmelzwasser des Eisblocks handeln und/oder um eine Flüssigkeit, die zugeführt wird. Der Ablauf führt kontaminiertes Sägefein mit. Er kann auch Eissplitter aufweisen. Stets wird der Ablauf aufgefangen und nach Maßgabe seiner Kontaminierung den Vorschriften entsprechend behandelt.

Im einzelnen bestehen im Rahmen der Erfindung mehrere Möglichkeiten für die Durchführung des erfindungsgemäßen Verfahrens. Eine bevorzugte Ausführungsform ist dadurch gekennzeichnet, daß der Sägevorgang so geführt wird, daß der Eisblock im Sägespalt über der Säge wieder zusammenfriert und das Sägefein dadurch eingefroren wird. Dabei wird zweckmäßigerweise mit einem unter Gefrierpunkt abgekühlten Eisblock mit eingefrorenem Bauteil gearbeitet. Eine andere Ausführungsform der Erfindung ist dadurch gekennzeichnet, daß in den Sägespalt beim Sägevorgang ein flüssiges Trennmittel, z. B. Glyzerin und/oder Glykol, eingeführt und das Sägefein dadurch eingefangen wird. Stets wird zweckmäßigerweise mit einer möglichst dünnen Säge, z. B. einer Bandsäge, gearbeitet.

Überraschenderweise fällt bei dem erfindungsgemäßen Verfahren freies Sägefein praktisch nicht mehr an. Bei den bevorzugten Ausführungsform der Erfindung, bei der der Eisblock wieder zusammenfriert, wird ein wesentlicher Teil des Sägefeins in den Eisblock wieder eingefroren. Wird dieser wieder aufgetaut, damit die einzelnen Elemente des zerlegten Bauteils manipuliert werden können, so läuft das Sägefein mit dem entstehenden Schmelzwasser ab, welches aufgefangen wird. Zwar läuft, wie bereits erwähnt, auch bei dem Sägevorgang Schmelzwasser ab, welches einen anderen Teil des Sägefeins mitführt, auch dieses Schmelzwasser mit dem kontaminierten Sägefein kann jedoch unschwer aufgefangen werden. Der Kanal, der sich im dem Eisblock um das Sägeband bildet, kann sehr schmal gehalten werden, beispielsweise dadurch, daß mit einem dünnen Sägeband gearbeitet und die Schnittgeschwindigkeit niedrig gehalten wird. Entsprechend klein ist auch das Austrittsloch des Säge bandes aus dem Eisblock bzw. das Eintrittsloch des Sägebandes, so daß hier an einer definierten Stelle nur eine minimale Freisetzung radioaktiv kontaminierten Sägefeins erfolgt, was leicht beherrscht werden kann. Bei der Ausführungsform mit Zuführung einer Flüssigkeit nimmt diese das kontaminierte Sägefein, wie beschrieben, auf.

Im folgenden wird die Erfindung anhand einer lediglich ein Ausführungsbeispiel darstellenden Zeichnung ausführlicher erläutert. Das Ausführungsbeispiel bezieht sich auf die Verfahrensweise, bei der der Eisblock wieder zusammenfriert. Es zeigen

Fig. 1 ein kontaminiertes Bauteil, welches durch einen Sägevorgang zerlegt werden soll, eingefroren in einen Eisblock,

Fig. 2 den Gegenstand nach Fig. 1 nach dem Zerlegen,

Fig. 3 in gegenüber den Fig. 1 und 2 wesentlich vergrößertem Maßstab einen Schnitt durch einen Eisblock mit eingefrorenem Bauteil beim Sägevorgang.

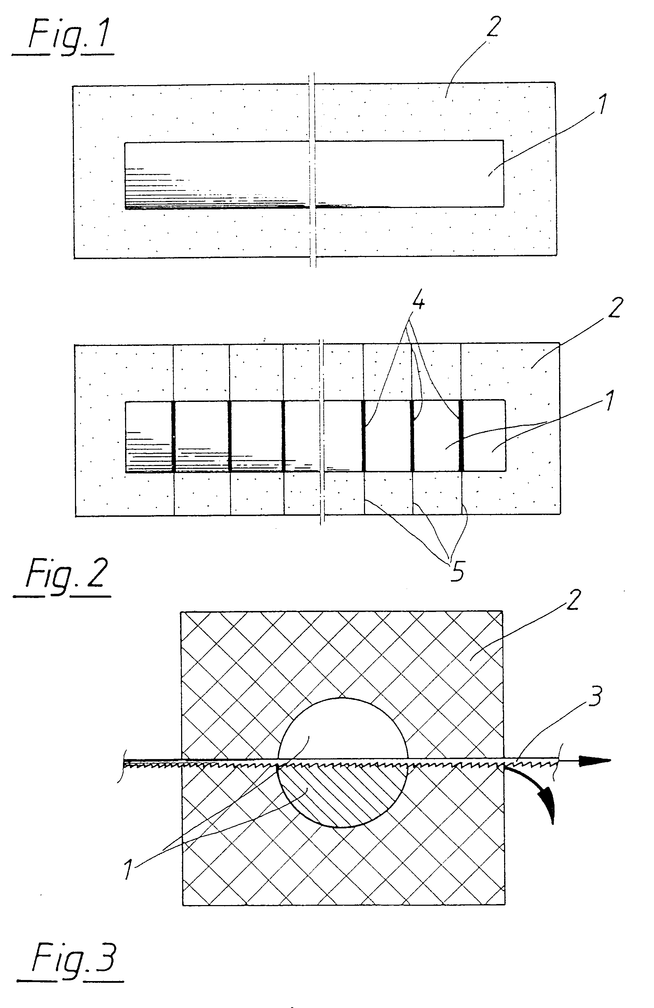

Aus einer vergleichenden Betrachtung der Figuren 1 und 2 entnimmt man, daß das kontaminierte Bauteil 1 in einen Eisblock 2 eingefroren wird. Danach wird der Eisblock 2 mit dem eingefrorenen Bauteil 1 zersägt. Der Sägevorgang wird so geführt, daß der Eisblock 2 im Sägespalt über dem Sägeband 3 wieder zusammenfriert. Das erläutert Fig. 2, wo im Bauteil die Trennschnitte 4 dick gezeichnet wurden und der wieder zusammenge frorene Sägespalt im Eisblock 2 durch jeweils einen dünnen Strich 5 angedeutet wurde. Die Einzelheiten entnimmt man aus der Fig. 3. Die Schraffur des Eisblocks 2 deutet an, daß er im Sägespalt wieder zusammengefroren ist. Lediglich um das Sägeband 3 ist ein schmaler Spalt frei, der aus Maßstabsgründen nicht erkennbar ist. Im übrigen erkennt man in Fig. 3, daß das Bauteil 1 praktisch zur Hälfte durchgesägt ist. Das Sägeband 3 bewegt sich in Richtung des rechts eingezeichneten Pfeiles. Das beim Sägevorgang entstehende Schmelzwasser ist durch einen Bogenpfeil angedeutet und wird aufgefangen.

## Patentansprüche

1. Verfahren zum Zerlegen eines radioaktiv kontaminierten Bauteils durch einen Sägevorgang unter Bildung von kontaminiertem Sägefein, **dadurch gekennzeichnet,** daß das kontaminierte Bauteil in einen Eisblock eingefroren wird und danach der Eisblock mit dem eingefrorenen Bauteil zersägt sowie das Sägefein im Sägespalt durch eine Flüssigkeit eingebunden wird.

2. Verfahren nach Anspruch 1, dadurch gekennzeichnet, daß der Sägevorgang so geführt wird, daß der Eisblock im Sägespalt über der Säge wider zusammenfriert und das Sägefein dadurch eingefangen wird.

3. Verfahren nach einem der Ansprüche 1 oder 2, dadurch gekennzeichnet, daß mit einem unter Gefrierpunkt abgekühlten Eisblock mit eingefrorenem Bauteil gearbeitet wird.

4. Verfahren nach Anspruch 1, dadurch gekennzeichnet, daß in den Sägespalt beim Sägevorgang ein flüssiges Trennmittel, z. B. Glyzerin und/oder Glykol, eingeführt und das Sägefein dadurch eingefangen wird.

5. Verfahren nach einem der Ansprüche 1 bis 4, dadurch gekennzeichnet, daß mit einer möglichst dünnen Säge, z. B. einer Bandsäge, gearbeitet wird.

## Claims

1. A method of cutting up a radioactively contaminated component by a sawing operation in which contaminated sawdust occurs, characterised in that the contaminated component is frozen into a block of ice and the block of ice containing the component frozezn therein is sawn up and the sawdust is bonded in the sawing gap by a liquid.

2. A method according to claim 1, characterised in that the sawing operation is so performed that the block of ice freezes together again in the sawing gap above the saw and the sawdust is thus captured.

3. A method according to claim 1 or 2, characterised in that the block of ice containing the component frozen therein is cooled to below freezing point for the operation.

4. A method according to claim 1, characterised in that a liquid release agent, e.g., glycerine and/or glycol, is introduced into the sawing gap during the sawing operation to capture the sawdust.

5. A method according to any one of claims 1 to 4, characterised in that the thinnest possible saw, e.g., a bandsaw, is used for the operation.

## Revendications

1. Procédé pour découper un élément de construction contaminé par la radioactivité au moyen d'une opération de sciage moyennant la formation d'un résidu de sciage contaminé, caractérisé en ce que l'on gèle l'élément de construction contaminé dans un bloc de glace et qu'on scie ensuite le bloc de glace contenant l'élément de construction gelé, et qu'on lie le résidu de sciage dans la fente de sciage à l'aide d'un liquide.

2. Procédé selon la revendication 1, caractérisé en ce qu'on exécute l'opération de sciage de manière que le bloc de glace gèle à nouveau dans la fente de sciage au-dessus de la scie et qu'on capte ainsi le résidu de sciage.

3. Procédé selon l'une des revendications 1 ou 2, caractérisé en ce qu'on travaille avec un bloc de glace refroidi au-dessous du point de congélation et contenant l'élément de construction gelé.

4. Procédé selon la revendication 1, caractérisé en ce que, lors de l'opération de sciage, on introduit dans la fente de sciage un agent de séparation liquide, par exemple de la glycérine et/ou du glycol, et qu'on capte ainsi le résidu de sciage.

5. Procédé selon l'une des revendications 1 à 4, caractérisé en ce qu'on travaille avec une scie aussi mince que possible, par exemple une scie à ruban.

_Fig.1_

_Fig.2_

_Fig.3_